# EUROPÄISCHE PATENTANMELDUNG

(11) **EP 4 258 085 A1**
(43) Veröffentlichungstag der Anmeldung: **11.10.2023**
(21) Anmeldenummer: 22166604.3
(22) Anmeldetag: 04.04.2022
(51) Int. Cl.: G06F 3/01

(54) **STEUERUNG EINES CURSORS BEI DER NUTZUNG VIRTUELLER BILDSCHIRME**

(71) Anmelder: Deutsche Telekom AG, 53113 Bonn (DE)
(72) Erfinder: SPEICH, Jan, 53757 Sankt Augustin (DE); HAMMERSCHMIDT, Johannes, 50389 Wesseling (DE)
(74) Vertreter: Nern, Peter-Michael

(57) **Zusammenfassung**

Die Erfindung betrifft die Cursorsteuerung bei der Nutzung mehrerer virtueller Bildschirme (1_{A}, 1_{B}, 1_{C}), wobei die virtuellen Bildschirme (1_{A}, 1_{B}, 1_{C}) und der Cursor durch ein von einem computerbasierten Endgerät (2) verarbeitetes Ein- und Ausgabeprogramm an den Brillengläsern einer mit diesem Endgerät gekoppelten elektronischen Brille 3 (E-Brille, nämlich MR-Brille oder VR-Brille) in einem virtuellen dreidimensionalen Raum visualisiert werden. Durch das Ein- und Ausgabeprogramm wird die Bewegung des Cursors zur Auswahl eines der Bildschirme (1_{A}, 1_{B}, 1_{C}) aufgrund einer Änderung der Blickrichtung eines die E-Brille (3) tragenden Nutzers (5) oder aufgrund der Bewegung des mit der E-Brille (3) gekoppelten Endgeräts (2) in Richtung des ausgewählten Bildschirms (1_{A}, 1_{B}, 1_{C}) gesteuert und hierbei ein virtueller Laserpointer entsprechend ausgerichtet. Nach der Auswahl eines Bildschirms (1_{A}, 1_{B}, 1_{C}) ist der Cursor auf diesem Bildschirm (1_{A}, 1_{B}, 1_{C}) und innerhalb des von diesem wiedergegebenen Bildschirminhalts mithilfe eines handbetätigten Eingabemittels (4) des Endgeräts (2) positionierbar.

## Beschreibung

Die Erfindung betrifft eine Lösung zur Steuerung eines Cursors bei der Nutzung mehrerer, Informationen eines computerbasierten Endgeräts ausgebender virtueller Bildschirme. Sie bezieht sich insoweit auf die Nutzung von virtuellen Bildschirmen, welche an den Brillengläsern einer das besagte Endgerät ausbildenden oder mit diesem gekoppelten elektronischen Brille (im Weiteren vereinfachend E-Brille) in einem virtuellen dreidimensionalen Raum visualisiert werden. Die betreffende E-Brille ist demnach zur Ausgabe virtueller Inhalte ausgebildet, wobei es sich bei ihr um eine MR-Brille oder um eine VR-Brille handeln kann. Hierbei betrifft die vorgestellte Lösung die Steuerung des Cursors hinsichtlich seiner Bewegung zu einem beliebigen der an den Gläsern der E-Brille visualisierten virtuellen Bildschirme und der Positionierung des Cursors auf einem hierdurch ausgewählten (virtuellen) Bildschirm, zum Beispiel zur Ansteuerung auf diesem Bildschirm dargestellter Objekte. Gegenstände der Erfindung sind ein entsprechendes Verfahren und ein zur Durchführung dieses Verfahrens geeignetes System.

Die Art der Nutzung computerbasierter Endgeräte durch den Menschen (Nutzer) hat sich in den vergangenen Jahrzehnten sehr stark verändert und unterliegt auch jetzt noch einer stetigen Weiterentwicklung. War diese Nutzung mit der Einführung von Personal Computern noch dadurch gekennzeichnet, dass einem jeweiligen Nutzer eines solchen Endgeräts die Ergebnisse der von ihm verarbeiteten Informationen in der Regel auf nur einem Computerbildschirm ausgegeben wurden, so ist es zumindest im geschäftlichen Umfeld schon seit längerem gebräuchlich, bei der Arbeit mit einem Computer mehrere mit diesem zur Informationsausgabe gekoppelte Bildschirme simultan zu nutzen. Dies hängt mit der immer stärkeren Durchdringung des Arbeitsalltags durch die Computerarbeit und hierbei mit der ständig steigenden Menge verarbeiteter und auszugebender Informationen zusammen. Häufig arbeitet dabei der Nutzer eines Computers gleichzeitig, respektive parallel, mit unterschiedlichen Programmanwendungen, deren Ergebnisse dann auf unterschiedlichen Bildschirmen ausgegeben werden.

Bei einem entsprechenden Computer muss es sich zudem längst nicht mehr um einen klassischen PC handeln. Vielmehr hat sich im Laufe der Entwicklung der Computertechnik insoweit eine starke Diversifizierung hinsichtlich der Formen von Computern ergeben. Man denke hierbei an mobile Computer, wie Laptops, oder Tablet-PCs, sowie daran, dass Computerarbeit heute sogar mittels sehr leistungsfähiger Handys, respektive Smartphones, im Grunde ortsunabhängig und überall ausgeführt werden kann. Verallgemeinernd soll daher nachfolgend von computerbasierten Endgeräten oder sprachlich vereinfachend von Endgeräten gesprochen werden, wobei es sich in den nachfolgenden Ausführungen bei Endgeräten stets um Endgeräte mit Computerfähigkeit, also um computerbasierte Endgeräte, handelt, sofern nicht ausdrücklich etwas anderes angegeben wird.

Im Zuge der vorgenannten Entwicklung haben sich nicht nur besagte Endgeräte, also die eigentlichen Computer, stark verändert, sondern auch die zur Ausgabe der mit ihrer Hilfe erarbeiteten Ergebnisse dienenden Mittel. Dies gilt insbesondere auch im Hinblick auf die Ausgabe visueller Informationen (Ergebnisse) mithilfe dazu ausgebildeter Anzeigeeinrichtungen. Man denke hierbei nur an den Übergang von Röhrenmonitoren zu flachen visuellen Ausgabegeräten, wie beispielsweise LCD-Bildschirmen.

Für spezielle Anwendungen, aber auch vor dem Hintergrund der bereits angesprochenen Möglichkeit, Computerarbeit nahezu überall ausführen zu können, haben sich hierbei auch ganz neue Ausgabeformen entwickelt. Eine dieser Möglichkeiten wird durch elektronische Brillen repräsentiert, die dazu ausgebildet sind, an ihren Brillengläsern Inhalte auszugeben, welche einer virtuellen Realität entsprechen. Hierbei können derartige elektronische Brillen (im Weiteren auch E-Brillen) so konzipiert sein, dass sie ausschließlich eine virtuelle Realität ausgeben, nämlich ausschließlich ihnen in geeigneter Weise zugeführte elektronische Daten visualisieren - so genannte VR-Brillen (VR = Virtual Reality) - oder dass sie Inhalte einer virtuellen Realität in Ergänzung zu der durch ihre Brillengläser vom Träger der Brille wahrnehmbaren tatsächlichen Realität ausgeben - so genannte AR-Brillen (AR = Augmented Reality), wobei man in Bezug auf letztere auch von MR-Brillen (MR = Mixed Reality) spricht, sofern dabei die virtuellen Inhalte auch mit der tatsächliche Realität interagieren können. Ursprünglich dienten diese elektronischen Brillen zum Beispiel dazu, einem Konstrukteur, als Nutzer einer solchen E-Brille, beim Tragen der Brille zusätzliche oder so in der Realität nicht wahrnehmbare Informationen, betreffend komplexe konstruktive Gebilde, durch Visualisierung auf den Gläsern der von ihm getragenen Brille zu vermitteln. Darüber hinaus gibt es eine Vielzahl seit längerem genutzter Einsatzmöglichkeiten im Freizeit- und Bildungsbereich.

Aber auch im Zusammenhang mit der klassischen Büroarbeit, respektive Computerarbeit, lassen sich E-Brillen der zuvor beschriebenen Art sehr vorteilhaft einsetzen. So ist es zum Beispiel denkbar, mit ihrer Hilfe klassische, jeweils auch einen gewissen Platz beanspruchende Bildschirme einzusparen und stattdessen die Informationen einem mit einem computerbasierten Endgerät, wie einem Desktop-PC, arbeitenden Nutzer unmittelbar vor seinen Augen auf den Gläsern einer von ihm getragenen E-Brille zu visualisieren. Von besonderem Vorteil ist eine solche Vorgehensweise aber gerade bei der Nutzung kleinerer computerbasierter Endgeräte, wie Tablet-PCs oder Smartphones, die zwar, wie bereits ausgeführt, sehr leistungsfähig sein können, aber selbst zumeist nur über ein vergleichsweise kleines Display verfügen.

Im Zusammenhang mit der Nutzung von E-Brillen im Rahmen der zuletzt genannten Anwendungszwecke ist es dabei bekannt, dem Nutzer einer solchen Brille auf den Brillengläsern Informationen über mehrere fiktiv räumlich voneinander getrennte Bildschirme, nämlich virtuelle Bildschirme, auszugeben. So können im Sichtfeld eines Nutzers gleichzeitig ein eine Internetseite wiedergebender Bildschirm, ein die Ergebnisse einer Tabellenkalkulation ausgebender Bildschirm und ein Bildschirm zur Ausgabe eines Dokuments erscheinen. Um mit den jeweiligen Applikationen arbeiten zu können, muss es dem Nutzer möglich sein, jeweils einen dieser virtuellen Bildschirme gezielt ansteuern und sich dann mit einem Cursor innerhalb eines von diesem präsentierten Contents bewegen zu können. Insoweit muss es dem Nutzer einerseits möglich sein, sich in einem durch die E-Brille mithilfe der voneinander getrennt und beanstandet dargestellten virtuellen Bildschirme erzeugten virtuellen Raum zu bewegen, als auch zweidimensionale Bewegungen auf der Präsentationsfläche eines dieser virtuellen Bildschirme auszuführen.

Aufgabe der Erfindung ist es, eine Lösung für das letztgenannte Problem anzugeben, es also einem Nutzer bei der Arbeit mit virtuellen Bildschirmen auf komfortable Art zu ermöglichen, einen dieser Bildschirme auszuwählen und auf der virtuellen, der Ausgabe von Informationen dienenden Oberfläche des ausgewählten Bildschirms einen Cursor frei positionieren zu können. Hierzu sind ein Verfahren anzugeben und ein zur Durchführung dieses Verfahrens geeignetes System bereitzustellen.

Die Aufgabe wird durch ein Verfahren mit den Merkmalen des Patentanspruchs 1 gelöst. Ein die Aufgabe lösendes, zur Durchführung des Verfahrens geeignetes System wird durch den ersten Sachanspruch charakterisiert. Vorteilhafte Ausund Weiterbildungen der Erfindung sind durch die jeweiligen Unteransprüche gegeben.

Bei dem zur Lösung der Aufgabe vorgeschlagenen Verfahren handelt es sich demnach um ein Verfahren zur Cursorsteuerung. Unter Anwendung dieses Verfahrens ist ein Cursor, entsprechend der gestellten Aufgabe, bei einer Nutzung mehrerer virtueller Bildschirme zu einem beliebigen dieser Bildschirme bewegbar und auf dem hierdurch ausgewählten virtuellen Bildschirm frei positionierbar. Das Verfahren geht hierbei entsprechend dem zuvor erläuterten Stand der Technik davon aus, dass die virtuellen Bildschirme und der Cursor durch ein von einem computerbasierten Endgerät verarbeitetes Ein- und Ausgabeprogramm an den Brillengläsern einer mit dem vorgenannten Endgerät gekoppelten, zur Ausgabe virtueller Inhalte ausgebildeten elektronischen Brille (E-Brille) in einem virtuellen dreidimensionalen Raum visualisiert werden.

Gesteuert durch das vorgenannte Ein- und Ausgabeprogramm erfolgt die Bewegung des Cursors zur Auswahl eines der virtuellen Bildschirme, in Abhängigkeit von den technischen Möglichkeiten der E-Brille und der Art des Endgeräts entweder durch eine Änderung der Blickrichtung eines die E-Brille tragenden Nutzers, nämlich durch Anblicken des ausgewählten Bildschirms, oder durch die Bewegung des mit der E-Brille gekoppelten Endgeräts in Richtung des ausgewählten virtuellen Bildschirms. Hierbei wird durch eine Änderung der Blickrichtung oder eine entsprechende Ausrichtung des Endgeräts ein virtueller Laserpointer auf den ausgewählten Bildschirm ausgerichtet. Nach der Auswahl eines virtuellen Bildschirms wird der Cursor dann auf diesem Bildschirm, beispielsweise zur Ansteuerung eines auf diesem dargestellten Objekts, innerhalb des von dem betreffenden virtuellen Bildschirm wiedergegebenen Bildschirminhalts mittels eines handbetätigten Eingabemittels des Endgeräts positioniert.

Es sei in diesem Zusammenhang darauf hingewiesen, dass die vorgenannten E-Brillen selbst nicht Gegenstand der Erfindung sind, sondern als grundsätzlich bekannt angesehen werden. Aus diesem Grunde soll an dieser Stelle auch keine vertiefende Diskussion zu den Unterschieden zwischen VR-Brillen, AR-Brillen oder MR-Brillen erfolgen. Unter zur Durchführung für das erfindungsgemäße Verfahrens geeigneten Brillen sowie unter Brillen, welche Bestandteil des erfindungsgemäßen Systems sind, werden aber in jedem Falle Brillen verstanden, die dazu ausgebildet sind, dass an ihren Brillengläsern elektronische/digitale Inhalte ausgegeben werden können, welche eine virtuelle Realität vermitteln. Diese Brillen werden im Zusammenhang mit der Beschreibung der Erfindung und in den Patentansprüchen ohne Differenzierung zwischen VR-Brillen, AR-Brillen und MR-Brillen als E-Brillen bezeichnet. Lediglich zum besseren Verständnis werden jeweils im Oberbegriff der unabhängigen Patentansprüche VR-Brillen und MR-Brillen einmal explizit genannt, wobei insoweit die hierbei nicht genannten AR-Brillen als Unterform der MR-Brillen angesehen werden. Dies soll lediglich verdeutlichen, dass es sich um Brillen handeln kann, die ausschließlich die Wahrnehmung virtueller Inhalte ermöglichen, aber auch um solche, welche die Wahrnehmung einer Mischung aus virtueller und tatsächlicher Realität ermöglichen.

Das Verfahren kann so ausgestaltet sein, dass der Cursor mit der Auswahl eines virtuellen Bildschirms und seiner Positionierung auf diesem Bildschirm mithilfe des handbetätigten Eingabemittels seine Gestalt ändert. Der Cursor kann seine Gestalt, respektive sein Aussehen, beispielsweise in der Weise ändern, dass ein ihn ursprünglich als Laserpunkt des virtuellen Laserpointers visualisierender Punkt (beispielsweise roter Punkt) nach der Auswahl des Bildschirms durch einen Mauszeiger ersetzt wird. Wie aus der Wahl der vorgenannten Begrifflichkeit bereits erkennbar, wird demnach für die Ausführung des Verfahrens als handbetätigtes Eingabemittel vorzugsweise (also nicht zwingend) eine mit dem computerbasierten Endgerät gekoppelte Computermaus verwendet. Denkbar ist aber unter anderem auch eine Positionierung des Cursors auf dem ausgewählten virtuellen Bildschirm mithilfe einer Tastatur, also insbesondere mithilfe der Cursortasten (Pfeiltasten) einer in üblicher Weise ausgebildeten Tastatur. Die Kopplung zwischen dem Endgerät und der Computermaus und/oder der Tatstatur kann dabei wahlweise über ein Kabel (zum Beispiel USB-Kabel) oder über Funk (zum Beispiel Bluetooth) bestehen.

Für die eigentliche Auswahl eines virtuellen Bildschirms, auf welchem der durch den virtuellen Laserpointer erzeugte Laserpunkt positioniert wird, kommen unterschiedliche Möglichkeiten in Betracht. Entsprechend einer bevorzugten dieser Möglichkeiten erfolgt dabei die Auswahl des angesteuerten virtuellen Bildschirms, indem der virtuelle Laserpointer, respektive der virtuell durch einen Laserpointer erzeugte Laserpunkt, für eine Mindestdauer von ein bis zwei Sekunden auf dem angesteuerten virtuellen Bildschirm verharrt, also durch den Nutzer auf diesem Bildschirm belassen wird.

Alternativ oder zusätzlich kann es auch vorgesehen sein, dass zur Auswahl eines virtuellen Bildschirms bei auf einem Bildschirm platzierten virtuellen Laserpointer vom Nutzer zur Bestätigung der Auswahl eine Taste oder dergleichen des handbetätigten Eingabemittels betätigt werden muss. Die Positionierung des Laserpointers zur Auswahl eines virtuellen Bildschirms kann im Falle dessen, dass der Cursor durch Änderungen der Blickrichtung gesteuert wird, entweder durch Detektion einer entsprechenden Kopfbewegung des die E-Brille tragenden Nutzers mittels der Brille oder durch sogenanntes Eye-Tracking erfolgen. Im letztgenannte Fall wird durch eine hierfür entsprechend ausgebildete E-Brille zur Ermittlung der jeweiligen Blickrichtung die Augenbewegung des Nutzers analysiert. Eine Auswahl eines virtuellen Bildschirms durch entsprechende Ausrichtung des computerbasierten Endgeräts auf den betreffenden Bildschirm kommt beispielsweise im Falle einer Nutzung eines mobilen Endgeräts zusammen mit einer E-Brille sowie mit einem handbetätigten Eingabemittel in Betracht.

Die virtuellen Bildschirme und die durch sie wiedergegebenen Inhalte können transparent dargestellt werden, wobei eine solche Art der Darstellung insbesondere bei einer Implementierung des Verfahrens zur Verwendung mit einer sowohl virtuelle Inhalte wiedergebenden als auch die Wahrnehmung der tatsächlichen Realität durch ihre Brillengläser hindurch ermöglichenden E-Brille gewählt werden wird. Hierbei kann das Verfahren weiterhin so gestaltet sein, dass die Transparenz des jeweils ausgewählten virtuellen Bildschirms gegenüber den anderen Bildschirmen verringert wird. Ergänzend oder alternativ kann das Verfahren aber auch so ausgestaltet sein, dass ein jeweils ausgewählter virtueller Bildschirm, solange er ausgewählt ist, gegenüber den anderen an den Brillengläsern der E-Brille visualisierten virtuellen Bildschirmen etwas vergrößert und/oder in einem stärkeren Kontrast dargestellt wird.

Ein ursprünglich ausgewählter virtueller Bildschirm wird vorzugsweise durch eine Änderung der Blickrichtung des die E-Brille tragenden Nutzers oder durch die Bewegung des mit der E-Brille gekoppelten Endgeräts in Richtung eines anderen der virtuellen Bildschirme wieder verlassen. Es kann aber auch vorgesehen sein, dass ein ursprünglich ausgewählter virtueller Bildschirm gewissermaßen "eingerastet" wird und dieser im Wege einer Änderung der Blickrichtung oder der Ausrichtung des computerbasierten Endgeräts zur Auswahl eines anderen virtuellen Bildschirms erst wieder verlassen werden kann, wenn der Benutzer an dem handbetätigten Eingabemittel eine spezielle, hierfür festgelegte, das heißt typischerweise durch Anwendungsprogramme nicht genutzte Tastenfolge (zum Beispiel dreimalig wiederholtes Drücken der rechten oder linken Taste einer Maus) ausführt.

Ein die Aufgabe lösendes, zur Durchführung des zuvor dargestellten Verfahrens geeignetes System zur Cursorsteuerung bei der Nutzung mehrerer virtueller Bildschirme umfasst zumindest ein computerbasiertes, bei seiner Verwendung Informationen auf den mehreren virtuellen Bildschirmen ausgebendes Endgerät und eine dieses Endgerät ausbildende oder mit ihm gekoppelte E-Brille. Bei letzterer handelt es sich um eine elektronische Brille, gemäß dem weiter oben dargelegten Verständnis. Das computerbasierte Endgerät ist mit mindestens einem handbetätigten Eingabemittel ausgestattet sowie mit einem Ein- und Ausgabeprogramm, welches dazu ausgebildet ist, bei seiner Verarbeitung durch das computerbasierte Endgerät an den Brillengläsern der E-Brille die virtuellen Bildschirme in einen virtuellen dreidimensionalen Raum und einen beweglichen Cursor zu visualisieren.

Darüber hinaus ist das von dem computerbasierten Endgerät verarbeitete Einund Ausgabeprogramm dazu ausgebildet, Bewegungen des Cursors zu steuern, indem es diesen, visualisiert als virtueller Laserpointer, entsprechend der Ausrichtung des mit der E-Brille gekoppelten Endgeräts oder der Blickrichtung eines die E-Brille tragenden Nutzers bewegt. Das Ein- und Ausgabeprogramm ist hierbei zudem dazu ausgebildet, den Cursor, nach der durch das Platzieren des virtuellen Laserpointers auf einem virtuellen Bildschirm erfolgenden Auswahl eines solchen Bildschirms, auf dem ausgewählten Bildschirm zu positionieren. Letzteres erfolgt, indem der Cursor mithilfe des handbetätigten Eingabemittels innerhalb des von dem betreffenden virtuellen Bildschirm wiedergegebenen Bildschirminhalts bewegt wird.

Bei dem computerbasierten Endgerät kann es sich beispielsweise um ein mobiles Endgerät, wie insbesondere ein Smartphone oder einen Tablet-PC, handeln. Im Zusammenhang mit einem solchen Endgerät kann es sich bei dem handbetätigten Eingabemittel unter anderem um einen Touchscreen des Gerätes handeln. Alternativ oder darüber hinaus kann von dem System als handbetätigtes Eingabemittel aber auch eine Computermaus vorgesehen sein, die - wie schon früher ausgeführt - mit dem Endgerät zum Beispiel über Bluetooth gekoppelt sein kann. Eine Verfahrensgestaltung, wonach ein virtueller Bildschirm durch entsprechende Ausrichtung des computerbasierten Endgeräts ausgewählt wird, kommt insbesondere bei einer derartigen Konfiguration - bei dem computerbasierten Endgerät handelt sich es um ein mobiles Endgerät - in Betracht, nämlich vor allem dann, wenn gegebenenfalls die E-Brille lediglich zur Visualisierung virtueller Bildschirme, nicht aber zur Detektion der jeweiligen Blickrichtung ihres Trägers ausgebildet ist.

Die Auswahl eines virtuellen Bildschirms durch eine entsprechende Ausrichtung des Endgeräts kommt aber auch dann in Betracht, wenn, was von der Erfindung ebenfalls umfasst sein soll, die E-Brille selbst als computerbasiertes Endgerät fungiert. Insoweit ist es jedenfalls denkbar, dass eine entsprechende E-Brille mit hochintegrierten, einen Mikroprozessor, respektive einen Microcontroller umfassenden Schaltkreisen ausgestattet und somit selbst dazu in der Lage ist, Anwendungsprogramme, wie eine Textverarbeitung oder eine Tabellenkalkulation, auszuführen. In einem solchen Fall entspricht ein Ändern der Blickrichtung, welches durch eine Kopfbewegung des Trägers der E-Brille bewirkt und detektiert wird, gleichzeitig einer Ausrichtung der das computerbasierte Endgerät ausbildenden E-Brille.

Abgesehen von dem zuletzt angesprochenen Fall - bei dem computerbasierten Endgerät handelt es sich um die E-Brille selbst - kann es sich bei dem computerbasierten Endgerät des Systems, wie ebenfalls schon angesprochen um ein mobiles Endgerät (zum Beispiel Smartphone) oder aber auch um einen Desktop-PC oder Laptop-PC handeln. Im Falle dessen, dass die E-Brille nicht gleichzeitig das computerbasierte Endgerät ausbildet, kann deren Kopplung mit dem jeweiligen Endgerät beispielsweise über Bluetooth, aber auch über WLAN oder über ein USB-Kabel erfolgen.

Schließlich kann es sich bei dem computerbasierten Endgerät des Systems aber auch um einen im Internet angeordneten Server handeln, mit dem ein die E-Brille tragender Nutzer interagiert. Die Verbindung zwischen einem solchen Server und der E-Brille erfolgt hierbei typischerweise über ein Mobilfunknetz, insbesondere über ein Netz nach dem 4G- oder 5G-Mobilfunkstandard.

Nachfolgend soll beispielhaft anhand von Zeichnungen nochmals auf einige Aspekte der Erfindung eingegangen werden. Die Zeichnungen zeigen:
- Fig. 1:: Ein mögliches Szenario bei der Arbeit mit mehreren virtuellen Bildschirmen,
- Fig. 2:: Das Szenario gemäß Fig. 1 bei einem Wechsel auf einen anderen der virtuellen Bildschirme,
- Fig. 3:: eine Abwandlung des Szenarios gemäß der Figuren 1 und 2.

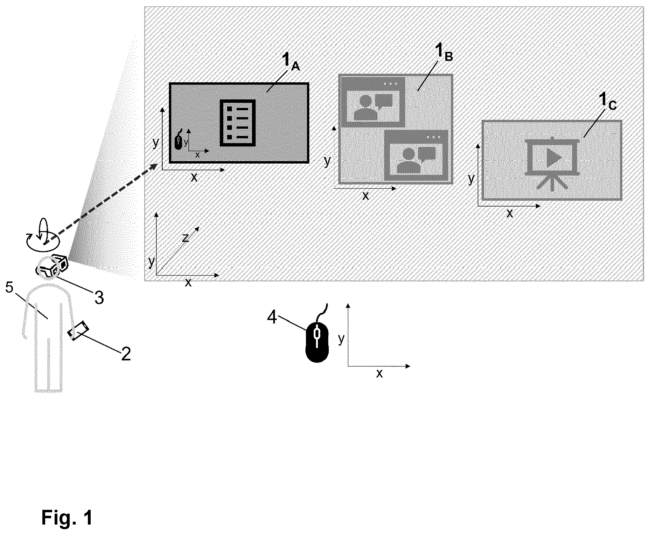

Die Fig. 1 veranschaulicht ein mögliches Szenario bei der Arbeit mit mehreren virtuellen Bildschirmen 1_{A}, 1_{B}, 1_{C}. Im Vordergrund der Abbildung ist ein Nutzer 5 zu sehen, welcher eine E-Brille 3 trägt. Auf den Gläsern der von ihm getragenen E-Brille 3 wird für den Nutzer 5 ein virtuelle Realität visualisiert. Teil dieser virtuellen Realität sind mehrere im Hintergrund dargestellte virtuelle (Arbeits-) Bildschirme 1_{A}, 1_{B}, 1_{C}. Durch eine entsprechende Ausrichtung seiner Blickrichtung, welche beispielsweise durch die für ein Eye-Tracking ausgebildete E-Brille 3 erfasst wird, hat der Nutzer momentan den mit 1_{A} bezeichneten Bildschirm ausgewählt. Die Ausrichtung seines Blickes wird für den Nutzer mithilfe eines virtuellen Laserpointers ebenfalls auf den Gläsern der E-Brille 3 visualisiert.

In seiner einen Hand hält der Nutzer 5 als computerbasiertes Endgerät 2 ein mobiles Endgerät, nämlich ein Smartphone. Dieses Endgerät 2 ist über Bluetooth mit einem handbetätigten Eingabemittel 4, hier mit einer Computermaus, gekoppelt. Es hat sich andererseits gezeigt, dass die Computermaus als typisches zweidimensional orientiertes Eingabegerät wenig geeignet ist, den Cursor in Form des virtuellen Laserpointers zielgerichtet in dem virtuellen dreidimensionalen Raum, in welchem die virtuellen Bildschirme 1_{A}, 1_{B}, 1_{C} angeordnet sind, zu bewegen.

Deshalb erfolgt die Auswahl eines Bildschirms 1_{A}, 1_{B}, 1c mittels des virtuellen Laserpointers, also eines typischerweise dreidimensional orientierten Eingabemittels, durch Auswertung der Blickrichtung des die E-Brille 3 tragenden Nutzers 5. Hat der Nutzer 5 in dieser Weise einen entsprechenden virtuellen Bildschirm 1_{A}, 1_{B}, 1c - gemäß dem Beispiel in der Fig. 1 den Bildschirm 1_{A} - ausgewählt und verharrt dann sein Blick für etwa ein bis zwei Sekunden auf diesem Bildschirm 1_{A}, dann wird die Cursorsteuerung gemäß der vorgestellten Lösung an die Maus (handbetätigtes Eingabemittel 4) übergeben. Gegebenenfalls kann hierbei die Darstellung des Cursors von der bisherigen Darstellung als virtueller Laserpunkt auf einen Mauszeiger wechseln. Mit der Maus als handbetätigtem Eingabemittel 4 kann der Nutzer 5 wiederum den Cursor zielgerichteter und wesentlich exakter auf dem ausgewählten virtuellen Bildschirm 1_{A} bewegen und, beispielsweise zur Ansteuerung eines auf diesem Bildschirm 1_{A} dargestellten Bedienelements, wie beispielsweise eines durch die Software visualisierten Buttons, positionieren.

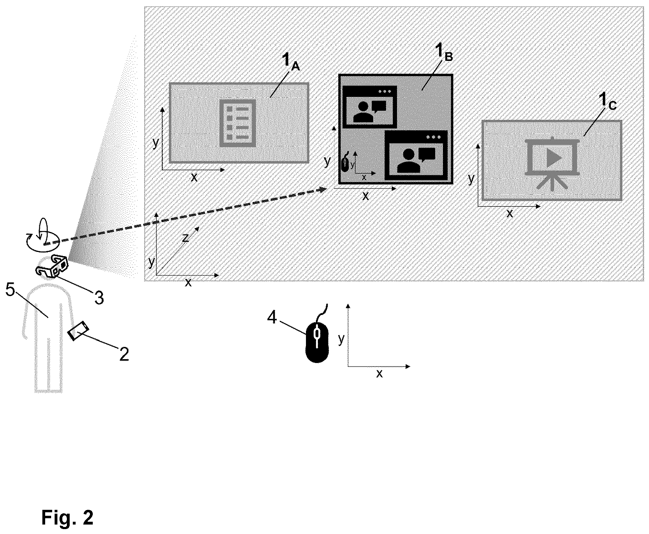

Die Fig. 2 zeigt das Szenario gemäß der Fig. 1, wobei jedoch der Nutzer 5 von dem mit 1_{A} gekennzeichneten virtuellen Bildschirm auf den mit 1_{B} bezeichneten Bildschirm gewechselt hat. Er hat dazu lediglich seinen Blick von dem virtuellen Bildschirm 1_{A} abgewandt und stattdessen, erfasst durch das Eye-Tracking der E-Brille, dem virtuellen Bildschirm 1_{B} zugewandt. Auf dem Bildschirm 1_{B} kann der Nutzer 5, nachdem er diesen durch Belassen seines Blicks auf dem Bildschirm 1_{B} ausgewählt hat, dann wiederum den Cursor mittels der mit dem mobilen Endgerät 2 (Smartphone) gekoppelten Maus als handbetätigtes Eingabemittel 4 positionieren.

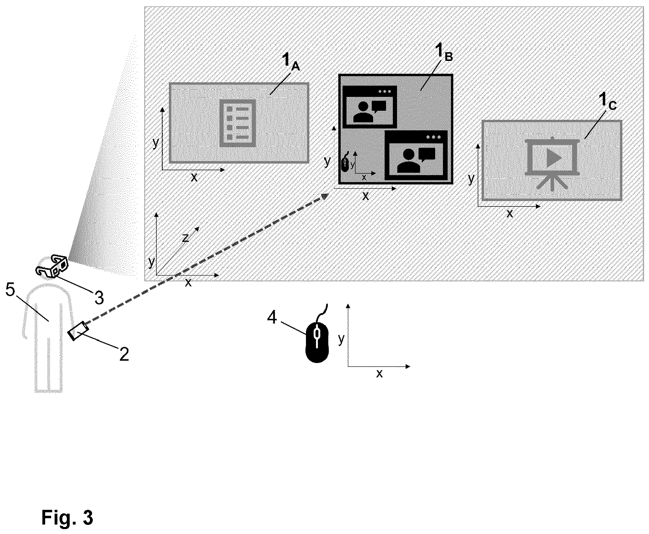

Die Fig. 3 zeigt eine Abwandlung des Szenarios nach den Figuren 1 und 2, bei welchem der Nutzer 5 einen von ihm auszuwählenden virtuellen Bildschirm 1_{A}, 1_{B}, 1_{C} nicht mit seinem Blick, sondern durch Ausrichtung des mobilen computerbasierten Endgeräts 2 (Smartphone) ansteuert. Sobald er das Smartphone für eine Dauer von ein bis zwei Sekunden auf einen der virtuellen Bildschirme 1_{A}, 1_{B}, 1_{C} ausgerichtet hat (im dargestellten Beispiel Bildschirm 1_{B}), wechselt die Cursorsteuerung, ebenso wie in den Figuren 1 und 2 symbolisch veranschaulicht, auf das handbetätigte Eingabegerät 4, respektive die mit dem Smartphone gekoppelte Computermaus. Ein solche Implementierung des beschriebenen Verfahrens kommt insbesondere im Zusammenhang mit der Verwendung einer einfacheren E-Brille 3 in Betracht, welche zwar virtuelle Objekte (hier Bildschirme 1_{A}, 1_{B}, 1_{C}) visualisieren, jedoch die jeweilige Blickrichtung ihres Trägers nicht detektieren kann. Insoweit kann das Verfahren auch in der Weise implementiert sein, dass es möglich ist, das Ein- und Ausgabeprogramm über ein Einstellungsmenü im Hinblick auf die Erkennung gewünschter Bewegungen des virtuellen Laserpointers an die dafür seitens der E-Brille 3 bestehenden Möglichkeiten anzupassen.

## Patentansprüche

1. Verfahren zur Steuerung eines Cursors, nach welchem der Cursor bei einer Nutzung mehrerer virtueller Bildschirme (1_{A}, 1_{B}, 1_{C}) zu einem beliebigen dieser virtuellen Bildschirme bewegbar und auf dem hierdurch ausgewählten Bildschirm (1_{A}, 1_{B}, 1c) frei positionierbar ist, wobei die virtuellen Bildschirme (1_{A}, 1_{B}, 1_{C}) und der Cursor durch ein von einem computerbasierten Endgerät (2) verarbeitetes Ein- und Ausgabeprogramm an den Brillengläsern einer mit diesem Endgerät gekoppelten E-Brille (3), nämlich einer als MR-Brille oder als VR-Brille zur Ausgabe virtueller Inhalte ausgebildeten elektronischen Brille, in einem virtuellen dreidimensionalen Raum visualisiert werden, **dadurch gekennzeichnet, dass**, gesteuert durch das Ein- und Ausgabeprogramm, die Bewegung des Cursors zur Auswahl eines der virtuellen Bildschirme (1_{A}, 1_{B}, 1_{C}) durch eine Änderung der Blickrichtung eines die E-Brille (3) tragenden Nutzers (5), nämlich durch Anblicken des ausgewählten Bildschirms (1_{A}, 1_{B}, 1_{C}) oder durch die Bewegung des mit der E-Brille (3) gekoppelten Endgeräts (2) in Richtung des ausgewählten Bildschirms (1_{A}, 1_{B}, 1c) erfolgt, wodurch ein virtueller Laserpointer auf den ausgewählten Bildschirm (1_{A}, 1_{B}, 1c) ausgerichtet wird und dass der Cursor nach der Auswahl eines Bildschirms (1_{A}, 1_{B}, 1_{C}) auf diesem Bildschirm (1_{A}, 1_{B}, 1_{C}) und innerhalb des von diesem wiedergegebenen Bildschirminhalts mithilfe eines handbetätigten Eingabemittels (4) des Endgeräts (2) positionierbar ist.

2. Verfahren nach Anspruch 1, **dadurch gekennzeichnet, dass** eine Änderung der Blickrichtung zur Auswahl eines virtuellen Bildschirms (1_{A}, 1_{B}, 1_{C}) von der hierfür ausgebildeten E-Brille (3) durch Eye-Tracking festgestellt wird.

3. Verfahren nach Anspruch 1 oder 2, **dadurch gekennzeichnet, dass** der Cursor mit der Auswahl eines virtuellen Bildschirms (1_{A}, 1_{B}, 1_{C}) und seiner Positionierung auf diesem Bildschirm (1_{A}, 1_{B}, 1c) mithilfe des handbetätigten Eingabemittels (4) seine Gestalt ändert und als Mauszeiger visualisiert wird.

4. Verfahren nach der Ansprüche 1 bis 3, **dadurch gekennzeichnet, dass** die Auswahl eines virtuellen Bildschirms (1_{A}, 1_{B}, 1c) erfolgt, indem der virtuelle Laserpointer für eine Mindestdauer von 1 bis 2 Sekunden auf diesem verharrt.

5. Verfahren nach der Ansprüche 1 bis 3, **dadurch gekennzeichnet, dass** die Auswahl eines virtuellen Bildschirms (1_{A}, 1_{B}, 1c) erfolgt, indem diese Auswahl bei auf dem virtuellen Bildschirm (1_{A}, 1_{B}, 1c) platzierten virtuellen Laserpointer vom Nutzer durch Drücken einer Taste des handbetätigten Eingabemittels (4) bestätigt wird.

6. Verfahren nach einem der Ansprüche 1 bis 5, **dadurch gekennzeichnet, dass** die virtuelle Bildschirme (1_{A}, 1_{B}, 1_{C}) und die durch sie wiedergegebenen Inhalte transparent dargestellt werden, wobei die Transparenz des jeweils ausgewählten virtuellen Bildschirms (1_{A}, 1_{B}, 1_{C}) gegenüber den anderen Bildschirmen (1_{A}, 1_{B}, 1_{C}) verringert wird.

7. Verfahren nach einem der Ansprüche 1 bis 6, **dadurch gekennzeichnet, dass** ein ausgewählter virtueller Bildschirm (1_{A}, 1_{B}, 1_{C}) gegenüber den anderen an den Brillengläsern der E-Brille (3) visualisierten virtuellen Bildschirmen vergrößert und/oder mit einem stärkeren Kontrast dargestellt wird.

8. Verfahren nach einem der Ansprüche 1 bis 7, **dadurch gekennzeichnet, dass** ein ursprünglich ausgewählter virtueller Bildschirm (1_{A}, 1_{B}, 1_{C}) durch eine Änderung der Blickrichtung des die E-Brille (3) tragenden Nutzers (5) oder durch die Bewegung des mit der E-Brille (3) gekoppelten Endgeräts in Richtung eines einer der anderen virtuellen Bildschirme (1_{A}, 1_{B}, 1c) wieder verlassen wird.

9. System zur Cursorsteuerung bei der Nutzung mehrerer virtueller Bildschirme (1_{A}, 1_{B}, 1c), mit einem computerbasierten, bei seiner Verwendung Informationen auf den mehreren virtuellen Bildschirmen (1_{A}, 1_{B}, 1c) ausgebenden Endgerät (2), mit einer das computerbasierte Endgerät (2) ausbildenden oder mit diesem gekoppelten E-Brille (3), nämlich einer als MR-Brille oder VR-Brille zur Ausgabe virtueller Inhalte ausgebildeten elektronischen Brille, wobei das computerbasierte Endgerät (2) ausgestattet ist mit mindestens einem handbetätigten Eingabemittel (4) und mit einem Ein- und Ausgabeprogramm, welches dazu ausgebildet ist, bei seiner Verarbeitung durch das computerbasierte Endgerät (2) an den Brillengläsern der E-Brille (3) die virtuellen Bildschirme (1_{A}, 1_{B}, 1_{C}) in einem virtuellen dreidimensionalen Raum und einen beweglichen Cursor zu visualisieren, **dadurch gekennzeichnet, dass** das von dem computerbasierten Endgerät (2) verarbeitete Ein- und Ausgabeprogramm dazu ausgebildet ist, Bewegungen des Cursors zu steuern, indem es diesen, visualisiert als virtueller Laserpointer, entsprechend der Ausrichtung des mit der E-Brille (3) gekoppelten Endgeräts (2) oder der Blickrichtung eines die E-Brille (3) tragenden Nutzers (5) bewegt und ihn nach der durch das Platzieren des virtuellen Laserpointers auf einem virtuellen Bildschirm (1_{A}, 1_{B}, 1c) erfolgenden Auswahl innerhalb des von dem ausgewählten Bildschirm (1_{A}, 1_{B}, 1c) wiedergegebenen Bildschirminhalts entsprechend, mithilfe des mindestens einen handbetätigten Eingabemittels (4) des Endgeräts (2) gemachter Eingaben positioniert.

10. System nach Anspruch 9, **dadurch gekennzeichnet, dass** es sich bei dem computerbasierten Endgerät (2) um ein Smartphone oder um einen Tablet-PC handelt, nämlich um ein mobiles Endgerät, welches mit der E-Brille (3) über eine Bluetooth-Verbindung verbunden ist.

11. System nach Anspruch 10, **dadurch gekennzeichnet, dass** das mindestens eine handbetätigte Eingabemittel (4) durch einen Touchscreen des mobilen Endgeräts (2) ausgebildet wird.

12. System nach Anspruch 9, **dadurch gekennzeichnet, dass** es sich bei dem computerbasierten Endgerät (2) um einen Laptop-Computer mit einem ein handbetätigtes Eingabemittel (4) ausbildenden Touchpad handelt.

13. System nach Anspruch 9, **dadurch gekennzeichnet, dass** es sich bei dem computerbasierten Endgerät (2) um einen Desktop-PC handelt.

14. System nach Anspruch 9, **dadurch gekennzeichnet, dass** es sich bei dem computerbasierten Endgerät (2) um einen Server im Internet handelt, welcher mit der dafür ausgebildeten E-Brille (3) über ein Mobilfunknetz verbunden ist.

15. System nach einem der Ansprüche 9 bis 14, **dadurch gekennzeichnet, dass** dieses als handbetätigtes Eingabemittel (4) eine Computermaus umfasst, welche mit dem computerbasierten Endgerät (2) über eine Funkverbindung kurzer Reichweite oder über ein Kabel verbunden ist.
